Europäisches Patentamt

European Patent Office

Office européen des brevets

(19)

(11) Veröffentlichungsnummer: **0 269 793 B1**

# EUROPÄISCHE PATENTSCHRIFT

(45) Veröffentlichungstag der Patentschrift: **03.07.91**

(51) Int. Cl.⁵: **A47J 43/046, A47J 42/56**

(21) Anmeldenummer: **87112453.3**

(22) Anmeldetag: **27.08.87**

(54) Küchenmaschine zum Verarbeiten von Nahrungsmitteln.

(30) Priorität: **31.10.86 DE 3637169**

(43) Veröffentlichungstag der Anmeldung:
**08.06.88 Patentblatt 88/23**

(45) Bekanntmachung des Hinweises auf die
Patenterteilung:
**03.07.91 Patentblatt 91/27**

(84) Benannte Vertragsstaaten:
**AT CH DE ES FR GB LI**

(56) Entgegenhaltungen:
**EP-A- 0 101 237**
**FR-A- 2 552 647**
**GB-A- 2 118 828**

(73) Patentinhaber: **Braun Aktiengesellschaft**
**Rüsselsheimer Strasse 22**
**W-6000 Frankfurt/Main(DE)**

(72) Erfinder: **Hickel, Sigrun**
**Am Mühlrain 1**
**W-6273 Waldems(DE)**
Erfinder: **Franke, Wolfgang**
**Walter-Rietig-Strasse 41**
**W-6070 Langen(DE)**

Rank Xerox (UK) Business Services

## Beschreibung

Die Erfindung betrifft eine Küchenmaschine zum Verarbeiten von Nahrungsmitteln, beispielsweise durch Mixen, Rühren, Kneten oder Zerkleinern, mit einem Behälter und einem darin drehbar gelagerten Arbeitswerkzeug, mit einem den Behälter verschließenden Deckel und mit einer Zuführeinrichtung, wobei die Zuführeinrichtung auf der Oberseite des Deckels angeordnet ist und zum einen aus einem an seiner Oberseite eine Einlaßöffnung und an seiner Unterseite eine Auslaßöffnung aufweisenden Aufnahmeteil besteht, das durch Seitenwände begrenzt ist und zum anderen aus einem an seiner Unterseite eine Durchlaßöffnung aufweisenden Abdeckteil besteht, das durch eine Zylinderwand nach außen begrenzt ist, wobei das Aufnahmeteil von seiner Beschickungsstellung - in der die Auslaßöffnung durch den Deckel und eine seitlich ausgebildete Aufnahmeöffnung des Abdeckteils durch die Seitenwand des Aufnahmeteils verschlossen wird - in seine Arbeitsstellung - in der die Auslaßöffnung des Aufnahmeteils über der Durchlaßöffnung des Abdeckteils liegt - über die Aufnahmeöffnung in das Abdeckteil bewegbar ist, wobei sowohl das Aufnahmeteil als auch das Abdeckteil als im Querschnitt nahezu gleich große Körper ausgebildet sind und wobei vom Übergang von der Beschickungsstellung in die Betriebsstellung das im Querschnitt etwas kleinere Aufnahmeteil über die Aufnahmeöffnung in das Abdeckteil bewegbar ist.

So ist beispielsweise ein Nahrungsmittelverarbeitungsgerät bekannt (FR-A- 552 647), das einen Behälter mit einer Zuführeinrichtung aufweist, die aus einem auf dem Deckel vorgesehenen Aufsatz besteht, der mit einer seitlichen, in etwa rechteckförmigen Einlaßöffnung versehen ist. In der Einlaßöffnung ist ein Aufnahmeteil zwischen einer Aufnahmeöffnung und einer Abgabeöffnung horizontal verschiebbar gelagert. Das Aufnahmeteil besteht aus einem Schieber, der in einem Abdeckteil des Deckteils horizontal verschiebbar gelagert ist. Das Aufnahmeteil ist mit einer Einlaßöffnung sowie mit einer Auslaßöffnung versehen. In der Aufnahmestellung des Schiebers ist die Einlaßöffnung des Aufnahmeteils nach oben hin offen, so daß größere Früchte in das Aufnahmeteil eingegeben werden können, während die Auslaßöffnung in dieser Stellung durch den Boden des Deckels verschlossen ist. Ebenso ist durch die Stirnseite des Aufnahmeteils der Zugang zum Behälter verschlossen, so daß ein unbeabsichtigtes Eingreifen in den Behälter ausgeschlossen ist.

Wird das Aufnahmeteil von der Aufnahmestellung in die Abgabestellung verschoben, so wird die Auslaßöffnung des Aufnahmeteils freigegeben, so daß das Fruchtteil durch eine im Deckel vorgesehene Durchlaßöffnung in den Behälter gelangen kann. In dieser Stellung verschließt die Rückseite des Schiebers ebenfalls die Durchlaßöffnung der Zuführeinrichtung, so daß auch in dieser Stellung ein unbeabsichtigtes Hineingreifen in den Behälter ausgeschlossen ist. Das Abdeckteil des Deckels weist zusätzlich einen Einfüllschacht auf, über dessen zweite Einlaßöffnung kleinere Früchte eingegeben werden können. Die Größe der zweiten Einlaßöffnung ist so bemessen, daß die Hand eines Benutzers nicht hineinpaßt, so daß ein Kontakt mit dem Arbeitswerkzeug vermieden und dadurch Verletzungen verhindert werden. Diese Anordnung hat den Nachteil, daß aufgrund der horizontalen Verschiebung des Aufnahmeteils dieses in seiner Querschnittsfläche nicht optimal groß ausgelegt werden kann.

Ferner ist eine Küchenmaschine mit einer Zuführeinrichtung der eingangs aufgeführten Art bekannt (EP-A- 101 237), die ebenfalls aus einem auf dem Deckel des Behälters vorgesehenen Abdeckteil und einem Aufnahmeteil besteht, die so ausgebildet sind, daß der Abdeckteil über das Aufnahmeteil herangeschwenkt werden kann, um die Querschnittsfläche der Einlaßöffnung des Aufnahmeteils zu begrenzen, so daß die Bedienungsperson nicht mehr mit der Hand in das Geräteinnere greifen kann. Erst wenn das Abdeckteil über das Aufnahmeteil geschoben worden ist, wird durch eine am Abdeckteil vorgesehene Lasche ein Schaltkontakt betätigt, der das Gerät auf Betriebsstellung einstellt. Da das Aufnahmeteil nur einen geringen Teil der Deckelfläche des Behälters abdeckt, ist das Aufnahmevolumen des Aufnahmeteils sehr gering, so daß nur verhältnismäßig kleine, ganzstückige Früchte vom Aufnahmeteil aufgenommen werden können. Das Aufnahmevolumen wird zum anderen auch noch dadurch verringert, daß ein am Abdeckteil ausgebildeter Steg beim Übergang von der Beschickungsstellung in die Arbeitsstellung über der Einfüllöffnung des Einfüllschachtes zu liegen kommt, durch den die Höhe des Einfüllschachtes eingeschränkt wird.

Der Erfindung liegt demgegenüber die Aufgabe zugrunde, das Aufnahme- und Abdeckteil derart auszubilden und am Behälter anzuordnen, daß auch größtmögliche Früchte bzw. Nahrungsmittel in das Aufnahmeteil eingegeben werden können, ohne daß dabei weder das Aufnahme- noch das Abdeckteil die Außenkanten des Deckels bzw. des Behälters überschreiten.

Diese Aufgabe wird erfindungsgemäß dadurch gelöst, daß das Aufnahmeteil um eine im wesentlichen mit der Drehachse des Arbeitswerkzeuges zusammenfallende Achse drehbar und dadurch nahezu vollständig in das Abdeckteil einschwenkbar ist, daß die Achse in etwa durch die gemeinsame Achse sowohl des Aufnahme- wie des Abdeckteilts verläuft, daß das Aufnahmeteil von der Beschikkungsstellung aus um etwa 180° in das Abdeckteil einschwenkbar ist und daß erst nach dem Einschwenken des Aufnahmeteils über die Aufnahmeöffnung in das Abdeckteil die Küchenmaschine einschaltbar ist. Da das Aufnahmeteil in der gleichen Ebene wie die Aufnahmeöffnung des Abdeckteils angeordnet ist, läßt sich die Aufnahmeöffnung sowohl in der Beschickungsstellung in der Arbeitsstellung des Aufnahmeteils durch dieses geschlossen halten, so daß in beiden Stellungen des Aufnahmeteils kein Zugang zum Inneren des Behälters möglich ist. Hierdurch wird verhindert, daß eine Bedienungsperson durch die rotierenden Arbeitswerkzeuge, insbesondere Schneid- oder Raspelscheiben, verletzt wird. Durch das vollständige Eintauchen des Aufnahmeteils in das Abdeckteil bei einer Drehung des Aufnahmeteils um 180° entsteht eine größtmögliche Einlaßöffnung und somit auch ein größtmöglicher Stauraum, insbesondere für große Früchte, am Aufnahmeteil. Dabei dient die eine Seitenwand des Aufnahmeteils gleichzeitig auch als Verschlußelement für die Aufnahmeöffnung des Abdeckteils, wenn sich das Aufnahmeteil sowohl in der einen als auch in der anderen Stellung (um 180° gedreht) befindet.

Um einen möglichst großen Aufnahmeraum im Aufnahmeteil für die Nahrungsmittel zu erreichen, ist es vorteilhaft, daß das Aufnahmeteil in seiner Beschickungsstellung für die Verarbeitung von besonders großstückigen Nahrungsmitteln vollständig aus dem Abdeckteil herausschwenkbar ist, daß sowohl die Einlaßöffnung als auch die Auslaßöffnung sich über den gesamten Querschnitt des Aufnahmeteils erstrecken und daß sich auch die Durchlaßöffnung über den gesamten Querschnitt des Abdeckteils erstreckt. Eine weitere Maßnahme zur Erzielung eines größtmöglichen Aufnahmeraums wird zusätzlich noch dadurch erreicht, daß sowohl das Aufnahmeteil als auch das Abdeckteil als Halbzylinder ausgebildet sind. Aufgrund der halbzylinderförmigen Ausbildung des Aufnahmeteils und des Abdeckteils ergibt sich in vorteilhafter Weise, daß die Aufnahmeöffnung im Abdeckteil einen rechteckförmigen Querschnitt aufweist. Um dabei nicht nur einen größtmöglichen Aufnahmeraum sondern auch einen größtmöglichen Zuführquerschnitt zu erhalten, ist in einer Weiterbildung der Erfindung vorgesehen, daß die ebene Seitenwand des halbzylinderförmigen Aufnahmeteils in ihrer Breite und Länge in etwa der Größe der Aufnahmeöffnung entspricht.

Damit der Deckel den zylindrischen Behälter völlig umschließt und sicher abdeckt, ist erfindungsgemäß vorgesehen, daß der Deckel aus einem zylinderförmigen Deckelsegment und einem halbzylinderförmigen Abdeckteil gebildet ist.

Das Abdeckteil bildet mit dem Aufnahmeteil eine dem Durchmesser des Behälters angepaßte Zylinderform, wenn das Aufnahmeteil mit Nahrungsmitteln beschickt werden kann, d.h., im ausgefahrenen Zustand des Aufnahmeteils. Hierdurch entsteht eine homogene Form von Behälter, Aufnahmeteil und Abdeckteil.

Eine vorteilhafte Lagerung des Aufnahmeteils erhält man dadurch, daß die Achse an ihrem einen Ende an einem im Behälter angebrachten Deckelsegment und an ihrem anderen Ende an einem am Abdeckteil angebrachten Deckelsegment drehbar gelagert ist.

In einer Weiterbildung der Erfindung ist vorgesehen, daß am Aufnahmeteil ein Anschlag ausgebildet ist, der bei in seiner Endlage verriegeltem Deckel erst nach dem vollständigen Einschwenken des Aufnahmeteils in das Abdeckteil eine am Gehäuse der Küchenmaschine ausgebildete Sicherheitsvorrichtung entriegelt. Hierdurch wird gewährleistet, daß erst nach ordnungsgemäßem Verschließen der Aufnahmeöffnung am Abdeckteil durch das Aufnahmeteil, d.h., erst dann, wenn das Aufnahmeteil vollständig in das Abdeckteil eingeschwenkt ist, die Sicherheitsvorrichtung entsperrt wird, so daß der Schalter der Küchenmaschine erst dann in seine Einschaltstellung gebracht werden kann und die Küchenmaschine anläuft.

Neben dem Aufnahmeteil ist es auch ferner möglich, daß auf der Oberseite des Abdeckteils ein Einfüllschacht ausgebildet ist, der für die Verarbeitung weniger großstückiger Nahrungsmittel eine entsprechend kleinere Einlaßöffnung aufweist. Durch die zweite Zuführeinrichtung im Abdeckteil, deren Einlaßöffnung eine Querschnittsfläche aufweist, die so groß ist, daß eine Bedienungsperson nicht in das Behälterinnere hineingreifen kann, können Verletzungen vermieden werden.

Um bei der Verwendung von Reib- oder Raspelscheiben in Verbindung mit dem Abdeckteil und dem Aufnahmeteil auch Nahrungsmittel nach herkömmlicher Art gegen eine Scheibe drücken zu können, ist es in einer Weiterbildung der Erfindung vorgesehen, daß der Einfüllschacht vertikal im Abdeckteil parallel zur Drehachse des Arbeitswerkzeugs verschiebbar geführt ist und als Stopfer für großstückige Nahrungsmittel dient.

Im folgenden wird die Erfindung anhand eines Ausführungsbeispiels in den Zeichnungen näher erläutert. Es zeigen:

FIG. 1        eine perspektivische Darstellung einer Küchenmaschine zum Zubereiten von Nahrungsmitteln mit einer Zuführeinrichtung zur Aufnahme großstückiger Nahrungsmittel nach der Erfindung, wobei im Behälter ein Schneidmesser ausgebildet ist,

FIG. 1 A      Darstellung entsprechend Fig. 1, wobei jedoch anstelle des Schneidmessers im Behälter ein Raspelwerkzeug mit einem Scheibenträger angeordnet ist,

FIG. 2 die auf der Oberseite der Küchenmaschine aufbringbare Zuführeinrichtung in der Beschickungsstellung,

FIG. 3 eine nur teilweise Einschwenkstellung des Aufnahmeteils der Zuführvorrichtung,

FIG. 4 die Endphase des Schwenkvorgangs des Aufnahmeteils und die
gleichzeitige Betriebsstellung der
Küchenmaschine, und

FIG. 5 eine ähnliche Darstellung wie in

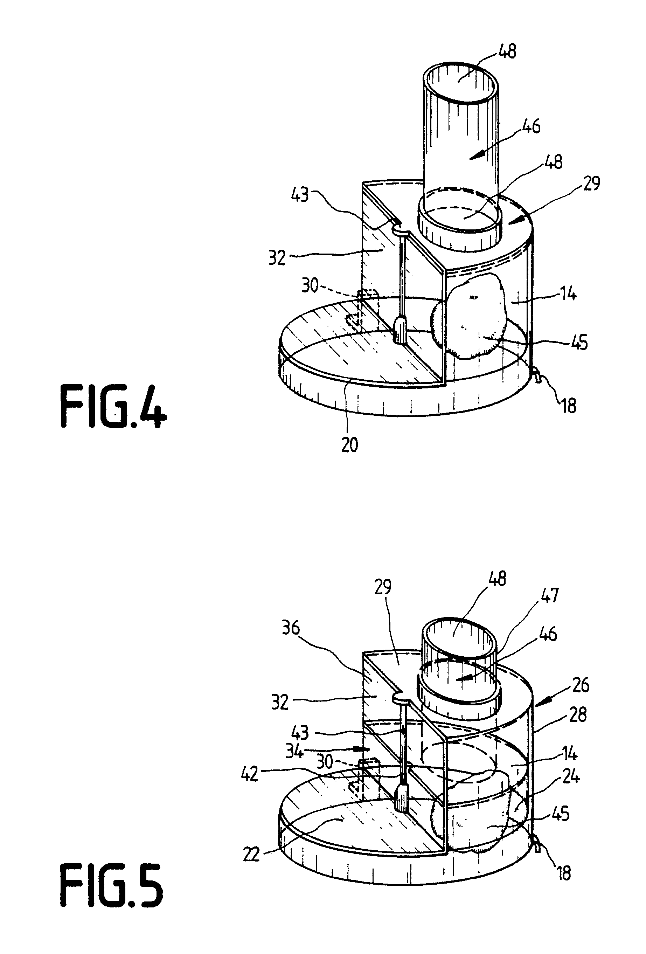

FIG. 4, wobei aber der in das Aufnahmeteil hineinragende Stopfen
die Früchte in das Innere des Behälters schiebt.

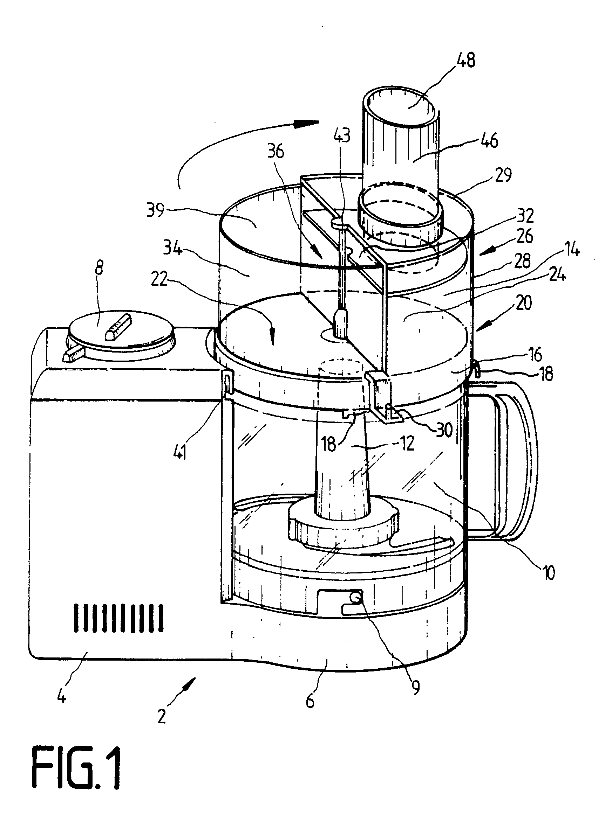

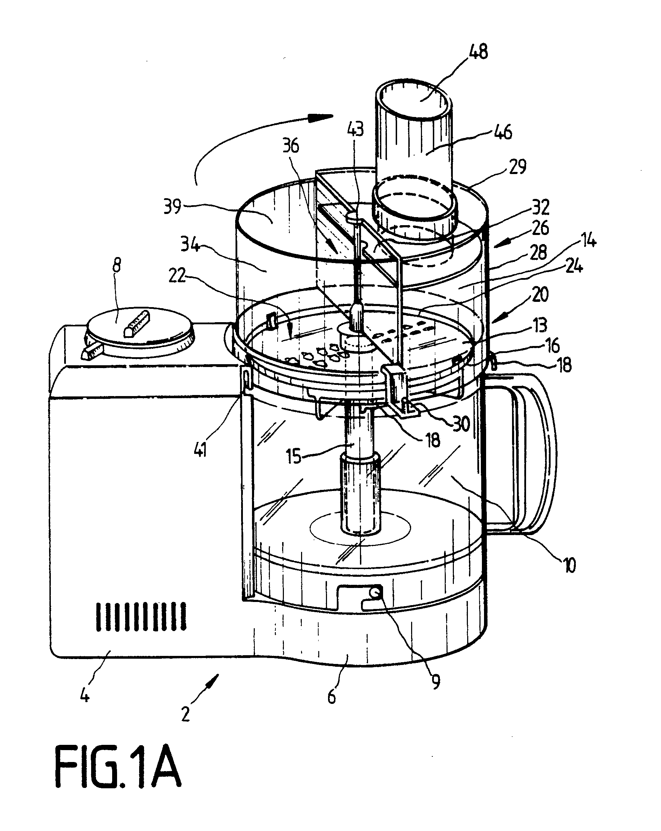

Zur Vereinfachung wurden in den Fig. 1 bis 5
für baugleiche Teile gleiche Bezugsziffern gewählt.

In der FIG. 1 und 1 A ist mit 2 eine Küchenmaschine zum Zubereiten, wie Mixen, Rühren, Kneten, Schlagen oder Zerkleinern, von Nahrungsmitteln bezeichnet, die aus einem Gehäuse 4 zur
Aufnahme eines in der Zeichnung nicht dargestellten Antriebsmotors und einem am Gehäuse 4 angeschlossenen Sockel 6 besteht. Der Motor der
Küchenmaschine 2 läßt sich über einen Schalter 8
betätigen, der sich erst dann drehen läßt, wenn der
Anschlag 30 eine im Gehäuse 4 ausgebildete, aber
in der Zeichnung nicht dargestellte Sicherheitsverriegelung entsichert.

Auf dem Sockel 6 ist ein Behälter 10 aufgesetzt, der über Verriegelungselemente 9 mit dem
Sockel 6 fest verbindbar ist. In dem Behälter 10
befindet sich in FIG. 1 ein Arbeitswerkzeug 12 in
Form eines zweischneidigen Messers, das koaxial
im Behälter 10 auf einer Antriebswelle aufgenommen ist und über den Motor und ein Riemengetriebe angetrieben wird. Das in FIG. 1 dargestellte
Messer 12 läßt sich gegen andere Arbeitswerkzeuge, wie Schneidscheiben, Sahnebesen etc., auswechseln. In FIG. 1 A ist daher anstelle des zweischneidigen Messers 12 in FIG. 1 eine Raspelscheibe 13 mit einem die Raspelscheibe tragenden
Scheibenträger 15 dargestellt, der ebenfalls von
einer in der Zeichnung nicht dargestellten Antriebswelle vom Boden des Behälters 10 her angetrieben
wird. Die Raspelscheibe 13 ist geringfügig unterhalb des Deckelsegments 22 angeordnet.

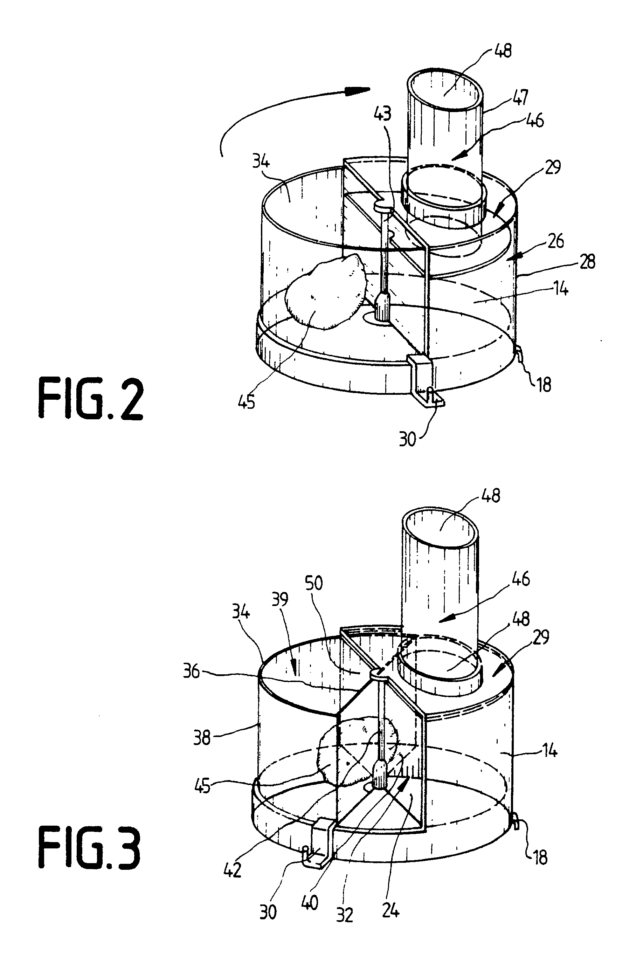

Die Zuführeinrichtung 14 nach der FIG. 1 und 1
A ist im Detail in den FIG. 2 bis 5 veranschaulicht.
In FIG. 1 und 2 befindet sich die Zuführeinrichtung
14, die den eigentlichen Deckel des Behälters 10
bildet, auf einem ringförmigen Flanschteil 16, der
auf das Oberteil des Behälters 10 aufsetzbar und
mit diesem über Verriegelungselemente 18 fest verbindbar ist. Die Oberkante 20 des Flanschteils
16 ist mittels eines halbkreisförmigen Deckelsegmentes 22 formschlüssig verschlossen, an das sich
auf der gleichen Ebene eine halbkreisförmige
Durchlaßöffnung 24 anschließt. Oberhalb der
Durchlaßöffnung 24 befindet sich ein Abdeckteil 26,
das ebenfalls halbzylinderförmig ausgebildet ist
und durch eine halbkreisförmige Zylinderwand 28
und ein zweites, oberes Deckelsegment 29 nach
außen begrenzt wird. Das Abdeckteil 26 weist eine
vertikal verlaufende, rechteckförmige Aufnahmeöffnung 32 auf, in deren Ebene ein halbzylinderförmiges Aufnahmeteil 34 horizontal zwischen einer Beschickungsstellung gemäß den Fig. 1 und 2 und
einer Arbeitsstellung gemäß FIG. 4 und 5 um 180°
schwenkbar gelagert ist. Das Aufnahmeteil 34 besteht aus einer rechteckförmigen Seitenwand 36
mit einer sich nach außen anschließenden, halbkreisförmigen Zylinderwand 38. Das Aufnahmeteil
34 ist in den Zeichnungen oben mit einer Einlaßöffnung 39 und unten mit einer Auslaßöffnung 40
ausgestattet (insbesondere Fig. 3).

Im mittleren Teil der Seitenwand 36 des Aufnahmeteils 34 ist in Fig. 3 ein Rohrstück 42 zur
Aufnahme einer Achse 43 vorgesehen, die an ihrem oberen Ende im zweiten Deckelsegment 29
und mit ihrem unteren Ende mit dem ersten Dek-
kelsegment 22 drehbar verbunden ist. Da die Aufnahmeöffnung 32 vertikal verlaufend angeordnet ist
und den ringförmigen Flanschteil 16 halbiert, erhält
man eine sehr große Aufnahmeöffnung 32, die sich
auf einfache Weise durch Verlängerung der Zylinderwand nach oben noch vergrößern läßt. Wie aus
FIG. 2 und 3 hervorgeht, ist das Aufnahmeteil 34
geringfügig kleiner als das Abdeckteil 26, so daß
das Aufnahmeteil 34 durch Drehen um 180° um
die vertikal verlaufende Achse 43 vollständig in das
Abdeckteil 26 eingeschwenkt werden kann.

In Fig. 1 und 2 ist das Aufnahmeteil 34 ausgeschwenkt und befindet sich somit in seiner Beschickungsstellung, in der große bzw. ganzstückige
Früchte 45 eingelegt werden können, ohne daß die
Bedienungsperson in das Innere des Behälters eingreifen kann, da die Seitenwand 36 die Durchlaßöffnung 24 vollständig verschließt. In dieser Stellung ist auch die Küchenmaschine 2 bzw. das
Arbeitswerkzeug 12 abgeschaltet, da der an der
Stirnseite des Aufnahmeteils 34 vorgesehene Anschlag 30 nicht in die Schlitzöffnung 41 im Gehäuse 4 eingreift, wo eine in der Zeichnung nicht
weiter dargestellte Sicherheitsverriegelung eine
Drehung des Schalters 8 verhindert und dadurch
die Stromversorgung zum Motor unterbrochen ist.

Nach Eingabe der Nahrungsmittel 45 in das
Aufnahmeteil 34 läßt sich dieses horizontal verschwenken (Fig. 3 und 4), bis das Aufnahmeteil 34
vollständig von dem Abdeckteil 26 aufgenommen
ist. In dieser Stellung gibt der Anschlag 30 den Schalter 8 frei, so daß das Gerät 2 in dieser Stellung seine Betriebsstellung einnimmt und der Motor in Drehung versetzt werden kann. Das Aufnahmeteil 34 hat also die Stellung nach Fig. 5 eingenommen, und es werden die Früchte 45 durch die Durchlaßöffnung 24 in das Innere des Behälters 10 (Fig. 1) abgegeben.

Um den Ausschiebevorgang der Früchte 45 im Aufnahmeteil 34 zu erleichtern, kann im zweiten Deckelsegment 29 in einem weiteren Einfüllschacht 46 ein Stopfen 47 vorgesehen sein, der in diesem vertikal verschiebbar angeordnet ist. Der Stopfen 47 ist hohlförmig ausgebildet. Durch den Stopfen 47 werden in FIG. 1 A die Früchte gegen die Raspelscheibe 13 gedrückt und von dieser durch die Drehung zerkleinert, von wo sie dann in den unteren Abschnitt des Behälters 10 fallen. Der Einfüllschacht 46 bildet eine zweite Einlaßöffnung 48 für kleinere Fruchtteile. Wie aus den Fig. 1 bis 5 hervorgeht, ist dabei die zweite Einlaßöffnung 48 wesentlich kleiner als die Durchlaßöffnung 24 bzw. die Querschnittsfläche der Aufnahmeöffnung 32. Die zweite Einlaßöffnung 48 ist mindestens so klein, daß die Bedienungsperson nicht durch diese hindurchgreifen kann.

In der Arbeitsstellung nach Fig. 5 verschließt die Seitenwand 36 des Aufnahmeteils 34 wieder vollständig die Durchlaßöffnung 24, so daß auch in dieser Stellung ein Durchreichen in das Innere des Behälters 10 nicht möglich ist. Folglich ergibt sich, daß die Küchenmaschine 2 mit der erfindungsgemäßen Zuführvorrichtung 14 in beiden Stellungen des Aufnahmeteils 34 einen Zugang der Bedienungsperson zum Innern des Behälters 10 durch Durchgreifen mit der Hand ausschließt. Da lediglich in der Stellung gemäß Fig. 5 die Küchenmaschine 2 sich einschalten läßt, wird auch in der Zwischenstellung nach Fig. 3 verhindert, daß die Bedienungsperson sich am ruhenden Messer 12 verletzt, wenn die reduzierte Querschnittsöffnung 50 ein Durchgreifen in das Innere des Behälters gestatten würde. Normalerweise ist jedoch die Querschnittsfläche 50 in der Mittelstellung des Aufnahmeteils 34 nach Fig. 3 so klein, daß die Bedienungsperson nicht in das Innere des Behälters 10 eingreifen kann. Die Zuführeinrichtung 14 ist so ausgebildet, daß sie ohne weiteres gegen die herkömmlichen Deckel bei derartigen Küchenmaschinen 2 mit einer üblichen Zuführeinrichtung kleinen Durchmessers ausgewechselt werden kann.

Anstelle des Arbeitswerkzeuges 12 nach Fig. 1 können auch auf einem Scheibenträger, der auf der Antriebswelle aufgesetzt wird, Reib- oder Schneidscheiben verwendet werden (siehe FIG. 1 A), die dann in Höhe der Öffnung des Behälters 10 zu liegen kommen. Beim Zerkleinerungsvorgang werden die Nahrungsmittel 45 im Aufnahmeteil 34 gehalten und rutschen nicht nach unten durch, da hierbei die Reib- oder Schneidscheiben die Nahrungsmittel 45 nach unten begrenzen. Erst wenn sie von den Scheiben zerkleinert worden sind, fallen sie durch die Schneidschlitze in den Behälter 10. Daher ist es auch erforderlich, daß der ringförmige Flanschteil 16 sehr niedrig gehalten wird, damit die Nahrungsmittel 45 nicht in den Raum unterhalb des Aufnahmeteils 34 eindringen können.

## Ansprüche

1. Küchenmaschine zum Verarbeiten von Nahrungsmitteln, beispielsweise durch Mixen, Rühren, Kneten oder Zerkleinern, mit einem Behälter (10) und einem darin drehbar gelagerten Arbeitswerkzeug (12, 13), mit einem den Behälter (10) verschließenden Deckel (22) und mit einer Zuführeinrichtung (14), wobei die Zuführeinrichtung (14) auf der Oberseite des Deckels (22) angeordnet ist und zum einen aus einem an seiner Oberseite eine Einlaßöffnung (39) und an seiner Unterseite eine Auslaßöffnung (40) aufweisenden Aufnahmeteil (34) besteht, das durch Seitenwände (36, 38) begrenzt ist und zum anderen aus einem an seiner Unterseite eine Durchlaßöffnung (24) aufweisenden Abdeckteil (26) besteht, das durch eine Zylinderwand (28) nach außen begrenzt ist, wobei das Aufnahmeteil (34) von seiner Beschickungsstellung - in der die Auslaßöffnung (40) durch den Deckel (22) und eine seitlich ausgebildete Aufnahmeöffnung (32) des Abdeckteils (26) durch die Seitenwand (36) des Aufnahmeteils (34) verschlossen wird - in seine Arbeitsstellung - in der die Auslaßöffnung (40) des Aufnahmeteils (34) über der Durchlaß-Öffnung (24) des Abdeckteils (26) liegt - über die Aufnahme-öffnung (32) in das Abdeckteil (26) bewegbar ist, wobei sowohl das Aufnahmeteil (34) als auch das Abdeckteil (26) als im Querschnitt nahezu gleich große Körper ausgebildet sind und wobei vom Übergang von der Beschickungsstellung in die Betriebsstellung das im Querschnitt etwas kleinere Aufnahmeteil (34) über die Aufnahmeöffnung (32) in das Abdeckteil (26) bewegbar ist,

**dadurch gekennzeichnet,**

daß das Aufnahmeteil (34) um eine im wesentlichen mit der Drehachse des Arbeitswerkzeuges (12, 13) zusammenfallende Achse (43) drehbar und dadurch nahezu vollständig in das Abdeckteil (26) einschwenkbar ist, daß die Achse (43) in etwa durch die gemeinsame Achse sowohl des Aufnahme- (34) wie des Abdeckteils (26) verläuft, daß das Aufnahmeteil (34) von der Beschickungsstellung aus um etwa 180° in das Abdeckteil (26) einschwenkbar ist und daß erst nach dem Einschwenken des Aufnahmeteils (34) über die Aufnahmeöffnung (32) in das Abdeckteil (26) die Küchenmaschine einschaltbar ist.

2. Küchenmaschine nach Anspruch 1,
**dadurch gekennzeichnet,**
daß das Aufnahmeteil (34) in seiner Beschikkungsstellung für die Verarbeitung von besonders großstückigen Nahrungsmitteln vollständig aus dem Abdeckteil (26) herausschwenkbar ist, daß sowohl die Einlaßöffnung (39) als auch die Auslaßöffnung (40) sich über den gesamten Querschnitt des Aufnahmeteils (34) erstrecken und daß sich auch die Durchlaßöffnung (24) über den gesamten Querschnitt des Abdeckteils (26) erstreckt.

3. Küchenmaschine nach Anspruch 2,
**dadurch gekennzeichnet,**
daß sowohl das Aufnahmeteil (34) als auch das Abdeckteil (26) als Halbzylinder ausgebildet sind,

4. Küchenmaschine nach Anspruch 3,
**dadurch gekennzeichnet,**
daß die ebene Seitenwand (36) des halbzylinderförmigen Aufnahmeteils (34) in ihrer Breite und Länge in etwa der Größe der Aufnahmeöffnung (32) entspricht.

5. Küchenmaschine nach Anspruch 4,
**dadurch gekennzeichnet,**
daß die Achse (43) an ihrem einen Ende an einem im Behälter (10) angebrachten Deckelsegment (22) und an ihrem anderen Ende an einem am Abdeckteil (26) angebrachten Deckelsegment (29) drehbar gelagert ist.

6. Küchenmaschine nach Anspruch 1,
**dadurch gekennzeichnet,**
daß am Aufnahmeteil (34) ein Anschlag (30) ausgebildet ist, der bei in seiner Endlage verriegeltem Deckel (22) erst nach dem vollständigen Einschwenken des Aufnahmeteils (34) in das Abdeckteil (26) eine am Gehäuse (4) der Küchenmaschine (2) ausgebildete Sicherheitsvorrichtung entriegelt.

7. Küchenmaschine nach Anspruch 1,
**dadurch gekennzeichnet,**
daß auf der Oberseite des Abdeckteils (26) ein Einfüllschacht (46) ausgebildet ist, der für die Verarbeitung weniger großstückiger Nahrungsmittel eine entsprechend kleinere Einlaß-öffnung (48) aufweist.

8. Küchenmaschine nach Anspruch 7,

**dadurch gekennzeichnet,**
daß der Einfüllschacht (46) vertikal im Abdeckteil (26) parallel zur Drehachse des Arbeitswerkzeugs (12, 13) verschiebbar geführt ist und als Stopfer (47) für großstückige Nahrungsmittel dient.

## Claims

1. A food processing apparatus for processing foods, the processing tasks including, for example, blending, mixing, kneading or cutting, with a vessel (10) and a processing tool (12, 13) rotatably mounted therein, with a lid (22) closing the vessel (10), and with a feed device (14) which is arranged on the upper side of the lid (22) and, for one thing, is comprised of a receptacle (34) having a filler opening (39) at its top end and a discharge opening (40) at its bottom end, the receptacle being bounded by side walls (36, 38), and which, for another thing, is comprised of a cover member (26) having a passage opening (24) on its underside and having as outer boundary a cylindrical wall (28), the receptacle (34) being movable from its loading position--in which the discharge opening (40) is closed by the lid (22) and a lateral receiving opening (32) of the cover member (26) is closed by the side wall (36) of the receptacle (34)--into its operating position--in which the discharge opening (40) of the receptacle (34) lies above the passage opening (24) of the cover member (26)--entering, as this occurs, through the receiving opening (32) into the cover member (26), both the receptacle (34) and the cover member (26) being configured as bodies of approximately equal areas of cross section, the receptacle (34) which is slightly smaller in cross section being adapted to enter the cover member (26) through the receiving opening (32) as it moves from the loading position into the operating position,
**characterized in that** the receptacle (34) is rotatable about an axle (43) coinciding essentially with the axis of rotation of the processing tool (12, 13) whereby it is adapted to swivel almost completely into the cover member (26), that the axle (43) extends approximately through the common axis of both the receptacle (34) and the cover member (26), that the receptacle (34) is adapted to be swivelled from the loading position into a position inside the cover member (26) by an angle of about 180°, and that the food processing apparatus cannot be turned on until after the receptacle (34) is swivelled into the cover member (26) through the receiving opening (32).

2. The food processing apparatus as claimed in claim 1,
characterized in that the receptacle (34), in its loading position for processing particularly large pieces of food, is adapted to be swivelled out of the cover member (26) completely, that both the filler opening (39) and the discharge opening (40) extend over the entire area of cross section of the receptacle (34), and that also the passage opening (24) extends over the entire area of cross section of the cover member (26).

3. The food processing apparatus as claimed in claim 2,
characterized in that both the receptacle (34) and the cover member (26) are semi-cylindrical structures.

4. The food processing apparatus as claimed in claim 3,
characterized in that the plane side wall (36) of the semi-cylindrical receptacle (34) corresponds in width and length approximately to the size of the receiving opening (32).

5. The food processing apparatus as claimed in claim 4,
characterized in that the axle (43) has its one end rotatably mounted on a lid segment (22) provided in the vessel (10) while its other end is rotatably mounted on a lid segment (29) provided on the cover member (26).

6. The food processing apparatus as claimed in claim 1,
characterized in that a stop means (30) is provided on the receptacle (34) which, with the lid (22) locked when in its limit position, does not unlock a safety device formed on the housing (4) of the food processing apparatus (2) until after the receptacle (34) is completely swivelled into the cover member (26).

7. The food processing apparatus as claimed in claim 1,
characterized in that a feed tube (46) is provided on the upper side of the cover member (26) which for the processing of smaller pieces of food has a correspondingly smaller filler opening (48).

8. The food processing apparatus as claimed in claim 7,
characterized in that the feed tube (46) is vertically slidably guided in the cover member (26) parallel to the axis of rotation of the processing tool (12, 13) and serves as a pusher (47) for large pieces of food.

**Revendications**

1. Appareil électroménager pour la préparation de produits alimentaires, par exemple par mélangeage, agitation, pétrissage ou réduction, avec un conteneur (10) et dans celui-ci un outil de travail (12, 13) monté de manière à pouvoir tourner, avec un couvercle (22) fermant le conteneur (10) et un dispositif d'alimentation (14), celui-ci étant disposé sur la face supérieure du couvercle (22) et se composant d'une part d'une partie réceptrice (34) qui présente sur sa face supérieure une ouverture d'introduction (39) et sur sa face inférieure une ouverture d'évacuation (40) et qui est limitée par des parois latérales (36, 38), et d'autre part d'une partie d'obturation (26) présentant sur sa face inférieure une ouverture de passage (24), limitée vers l'extérieur par une paroi cylindrique (28), la partie réceptrice (34) pouvant être déplacée entre une position de chargement, où l'ouverture d'évacuation (40) est fermée par le couvercle (22) et où une ouverture de réception (32) ménagée latéralement dans la partie d'obturation (26) est fermée par la paroi latérale (36) de la partie réceptrice (34), et une position de travail, où l'ouverture d'évacuation (40) de la partie réceptrice (34) se trouve au-dessus de l'ouverture de passage (24) de la partie d'obturation (26), en passant par l'ouverture de réception (32) dans la partie d'obturation (26), étant précisé que la partie réceptrice (34) et la partie d'obturation (26) sont formées par des corps de dimensions pratiquement égales en section et que, dans le passage de la position de chargement à la position de travail, la partie réceptrice (34) de section légèrement inférieure passe dans l'ouverture de réception (32) de la partie d'obturation (26), caractérisé en ce que la partie réceptrice (34) peut tourner autour d'un axe (43) coïncidant essentiellement avec l'axe de rotation de l'outil de travail (12, 13) et peut ainsi se pivoter presque intégralement dans la partie d'obturation (26), en ce que l'axe (43) passe approximativement par l'axe commun aussi bien de la partie réceptrice (34) que de la partie d'obturation (26), en ce que la partie réceptrice (34) peut, à partir de la position de chargement, être pivotée dans la partie d'obturation (26), sur environ 180°, et en ce que l'appareil électroménager ne peut être mis en service qu'après le pivotement de la partie réceptrice (34) dans la partie d'obturation (26) en passant par l'ouverture de réception (32).

2. Appareil électroménager selon la revendication 1, caractérisé en ce que la partie réceptrice (34), lorsqu'elle est en position de chargement, peut être extraite complètement de la partie d'obturation (26) pour le traitement de produits de taille particulièrement grande, en ce que l'ouverture d'introduction (39) aussi bien que l'ouverture d'évacuation (40) occupent toute la section de la partie réceptrice (34) et en ce que l'ouverture de passage (24) s'étend également sur toute la section de la partie d'obturation (26).

3. Appareil électroménager selon la revendication 2, caractérisé en ce que la partie réceptrice (34) aussi bien que la partie d'obturation (26) sont de forme semicylindrique.

4. Appareil électroménager selon la revendication 3, caractérisé en ce que la paroi latérale plane (36) de la partie réceptrice (34) de forme semicylindrique correspond approximativement par sa largeur et la longueur à la taille de l'ouverture de réception (32).

5. Appareil électroménager selon la revendication 4, caractérisé en ce que l'axe (43) est monté pivotant à l'une de ses extrémités dans un segment de couvercle (22) disposé dans le conteneur (10) et à l'autre de ses extrémités dans un segment de couvercle (29) disposé dans la partie d'obturation (26).

6. Appareil électroménager selon la revendication 1, caractérisé en ce que la partie réceptrice (34) porte une butée (30) qui, lorsque le couvercle (22) est verrouillé en position extrême, ne déverrouille un dispositif de sécurité monté sur le boîtier (4) de l'appareil électroménager (2) que lorsque la partie réceptrice (34) a complètement pivoté dans la partie d'obturation (26).

7. Appareil électroménager selon la revendication 1, caractérisé en ce qu'il est prévu sur la face supérieure de la partie d'obturation (26) un puits d'introduction (46) possédant une ouverture d'introduction (48) de section réduite pour la transformation de produits alimentaires moins gros.

8. Appareil électroménager selon la revendication 7, caractérisé en ce que le puits d'introduction (46) peut être déplacé verticalement dans la partie d'obturation (26), parallèlement à l'axe de rotation de l'outil de travail (12, 13) et sert de tampon (47) pour les produits alimentaires de grande taille.

FIG.1

FIG.1A

FIG.2

FIG.3

11

EP 0 269 793 B1

FIG.4

FIG.5

12